# EUROPEAN PATENT APPLICATION

(11) **EP 2 088 412 A1**
(43) Date of publication of application: **12.08.2009**
(21) Application number: 07835028.7
(22) Date of filing: 08.10.2007
(51) Int. Cl.: G01L 9/10, G01L 7/08

(54) **PRESSURE SENSOR**

(30) Priority: 02.11.2006 RU 2006140031
(71) Applicant: Rassomagin, Vasiliy Radionovich, Perm, 614025 (RU)
(72) Inventor: Rassomagin, Vasiliy Radionovich, Perm, 614025 (RU)
(74) Representative: Wiedemann, Peter
(86) International application number: PCT/RU2007/000544
(87) International publication number: WO 2008/054245

(57) **Abstract**

A pressure sensor comprising a membrane (1) made of a dielectric material in the shape of a disc with an inductance element in the form of a flat conductive spiral of an inductance coil (2), arranged at the inner side (3) of the membrane (1), and a measuring and registering unit (4).

The pressure sensor further comprises a cover (5) made of a dielectric material in the shape of a disc placed on the membrane (1), a conducting coating (9) at the inner surface (6) of said cover (5) above the flat conducting spiral of the inductance coil of an oscillating circuit (2) arranged at the inner side (3) of said membrane (1), wherein the measuring and registering unit (4) comprises an inductance coil for swapping power to the oscillating circuit (7), and an inductance coil for reading data, frequency of the oscillating circuit (8) resonance oscillations.

## Description

### Field of the Invention

The invention relates to automatics and computer engineering and it can be used in automatic systems for measuring pressure.

### Background of the Invention

A pressure sensor is known from the prior art (see patent RU 1699244, IPC G01L9/10, published on 27.02.1995). The sensor comprises a hollow cylindrical body and a measuring unit having an inductance coil. The body is mounted in a wall of the measuring object. The body is a short-circuited turn for a detachable coil of the measuring unit. The body can be mounted with an outer surface facing either the inside of the volume where pressure to be measured or outside the volume. In the last case, the coil can be placed outside the body wherein the pressure is increased in the inner body enclosure. If the body is used as a compensating sensible element together with the working body, the coil of the measuring unit is placed inside the enclosure defined by the bodies, and it can consist of two halves coupled inductively with the common exciting coil. The bodies can be made of a tensoresistive material, for example of manganin.

The sensor operates in the following way.

Under the action of the measured pressure, mechanical tension appears in the cylindrical body, said tension causes a change in electrical resistance of the short-circuited turn formed by the body wall. The body compression pressure results in a simultaneous decrease in the body tensoresistive material specific resistance and in the diameter, and in some increase in the body wall thickness. All these factors acting together lead to a decrease in the equivalent resistance of the short-circuited turn formed by the body cylindrical wall and coupled electromagnetically to the coil of the measuring unit. Thus, the measured pressure is converted in a change in complete (complex) resistance of the coil that is then registered by the measuring unit.

When measuring pressure with said sensor, there is a change in the complete (complex) resistance of the coil, and the value of the pressure is judged by the change of the resistance.

The presence of the short-circuited turn in the device of said sensor decreases accuracy of the pressure measuring since dissipated power in the short-circuited turn leads to a change of its temperature and electrical resistance, and therefore to a change of the complete (complex) resistance of the coil.

The closest reference to the claimed pressure sensor is a devise described in patent RU 2075896, IPC G 01 L 9/10, published on 20.03.1997).

This prototype of the claimed pressure sensor comprises a hollow cylindrical body divided by a flexible elastic element into two chambers, one of the chambers communicates with a measured medium, and electromagnetic elements. The body is dismountable and has an inner annular groove in the separation plane. The flexible elastic element arranged in said annular groove is in the shape of a disc membrane made of a dielectric gas-impermeable material. There are inserted inductive elements in the shape of flat conducting spirals at each side of the membrane, wherein in the centre of the membrane at each of its side there are inserted first contact areas connected to inner turns of the flat conducting spirals. There is a sealed metalized opening through the first contact areas and the membrane for connecting spirals to each other. The flat conducting spirals have opposite directions of winding from the membrane center in relation to each other. The outer turns of the flat conducting spirals are connected to two inserted contact areas at the membrane sides near its edge, said contact areas being the first and the second sensor terminals, and the electromagnetic elements in the shape of two flat inductance coils are arranged in the sensor body chambers axially and symmetrically in relation to the membrane. The ends of the flat inductance coils are respectively third, fourth, fifth and sixth sensor terminals connected to the measuring unit.

In said pressure sensor, a change in pressure results in some change in inductance of the flat conducting spirals formed at each side of the membrane, and the amount of pressure is determined by the amount of this change in the inductance.

Low accuracy of the prototype sensor is because of the through metalized opening in the membrane since this opening is not strong enough for high number of pressure measuring cycles. Said pressure sensor cannot be used for measuring pressure in a corrosive medium because of the flat conducting coils arranged at each side of the membrane.

### Disclosure of the Invention

The objective of the present invention is developing a simple sensitive and reliable pressure sensor especially suitable for use in corrosive media.

The aim is achieved because of features similar to the features of the prototype included in claim 1 of the invention. The pressure sensor comprises a membrane in the shape of a disc made of a dielectric material, said membrane has an inductive element in the shape of a flat conducting spiral of an inductance coil arranged on the inner side, and measuring and registering unit, said pressure sensor also has the following essential distinctive features: the sensor is provided with a cover of a dielectric material in the shape of a disc, said cover is placed on the membrane; there is a conductive coating on the inner surface of the cover above the flat conducting spiral of the inductance coil of an oscillating circuit, said coil arranged on the inner side of the membrane; the measuring and registering unit comprises an inductance coils for swapping power in the oscillating circuit, and an inductance coil for reading data, a frequency of the resonance oscillations of the oscillating circuit.

Design features of the main sensor elements, namely the cover and the membrane preferably made of fused quartz are disclosed in claim 2.

Design features of the cover conducting coating, namely that conducting coating is in the form of a strip arranged along a circumference on the cover inner surface are disclosed in claim 3.

Design features of the inductance coil for swapping power to the oscillating circuit, inductance coil for reading data, frequency of the oscillating circuit resonance oscillations of the measuring and registering unit are disclosed in claim 4, namely the inductance coil for swapping power to the oscillating circuit, the inductance coil for reading data, frequency of the oscillating circuit resonance oscillations of the measuring and registering unit are designed in the form of the flat conducting spirals arranged on the inner surface of the cover.

Design features of the flat conducting spiral of the oscillating circuit are disclosed in claim 5, namely the width of the first and the last turns of the flat conducting spiral of the oscillating circuit inductance coil is bigger than the width of the middle part turns of the flat conducting spiral of the oscillating circuit inductance coil.

In the claimed pressure sensor the self-capacitance of the flat conducting spiral of the oscillating circuit inductance coil changes when pressure changes. This self-capacitance is the capacitance distributed along the turns of the flat conducting spiral of the oscillating circuit inductance coil.

The claimed pressure sensor is a high technology product because the sensitive element, the flat conducting spiral of the oscillating circuit inductance coil, is produced by printing on the surface of the fused quartz.

High accuracy of production is defined by using fused quartz in the structure of the claimed pressure sensor.

Fused quartz has low thermal expansion and permittivity coefficients resulting in high temperature stability of inductance and self-capacitance of the flat conducting spiral of the oscillating circuit inductance coil, the sensitive element of the claimed pressure sensor. The membrane of the claimed pressure sensor made of fused quartz practically has no hysteresis and it is chemically inert.

The scope of essential features described above leads to the following technical result: addition of a new technical means for measuring pressure and enhancing manufacturability of the pressure sensor and accuracy of pressure measurement.

### Brief description of the drawings

The claimed pressure sensor is illustrated in the following drawings:
Fig. 1 is a cross-sectional view along A-A of the pressure sensor according to Fig. 2 and Fig. 3.
Fig. 2 is a view of the membrane from the side of the flat conducting spiral of the oscillating circuit inductance coil.
Fig. 3 is a view of the cover from the inner side.
Fig. 4 is a structure chart of one of the embodiments of the claimed pressure sensor.

### Embodiment of the Invention

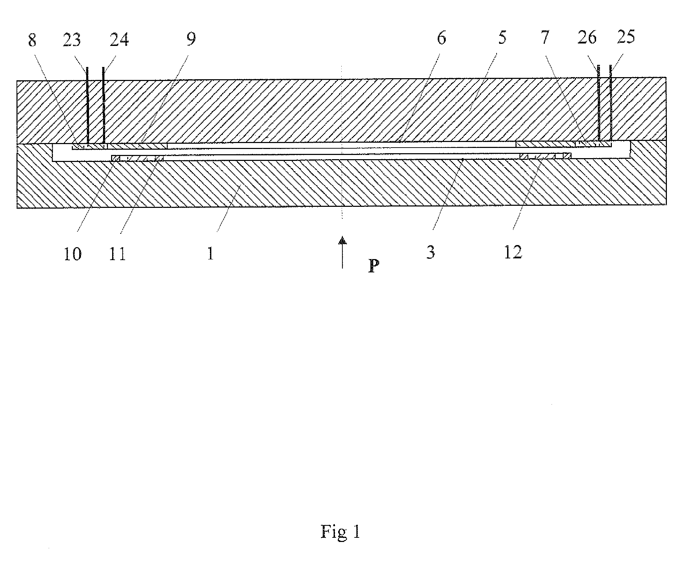

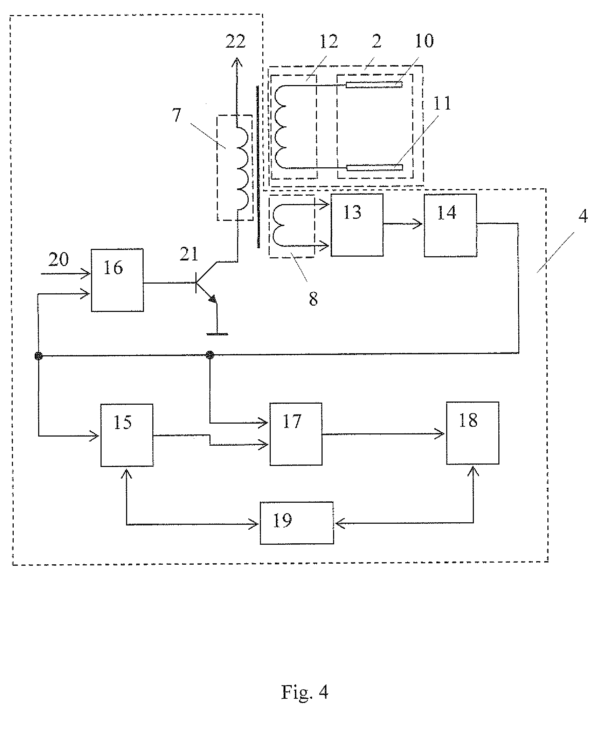

The pressure sensor comprises a membrane 1 (Fig. 1) with an inductive element in the form of a flat conducting spiral of the oscillating circuit 2 inductance coil (made of platinum), said spiral arranged on the inner side 3 of the membrane 1 coaxially to it and to a measuring and registering unit 4 (Fig. 4). The sensor is provided with a cover 5 in the shape of a disc made of a dielectric material. On the inner surface 6 of the cover there are flat conducting spirals of the inductance coil for swapping power to the oscillating circuit 7, inductance coil for reading data, frequency of resonance oscillations of oscillating circuit 8 of the measuring and registering unit 4, and conducting coating 9. The cover 5 is placed on the membrane 1 of a dielectric material, they both preferably made of fused quartz with glass-soldered joint.

The internal space of the pressure sensor is vacuumized. The pressure sensor is screened if necessary.

The membrane 1 of the pressure sensor having a shape of a disc with a small cavity in the central part functions as a body.

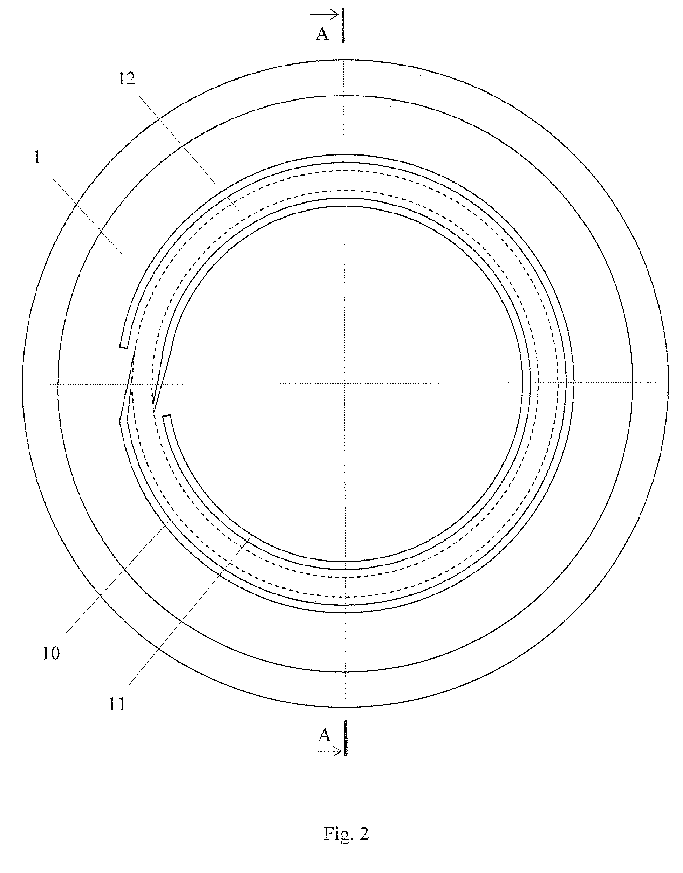

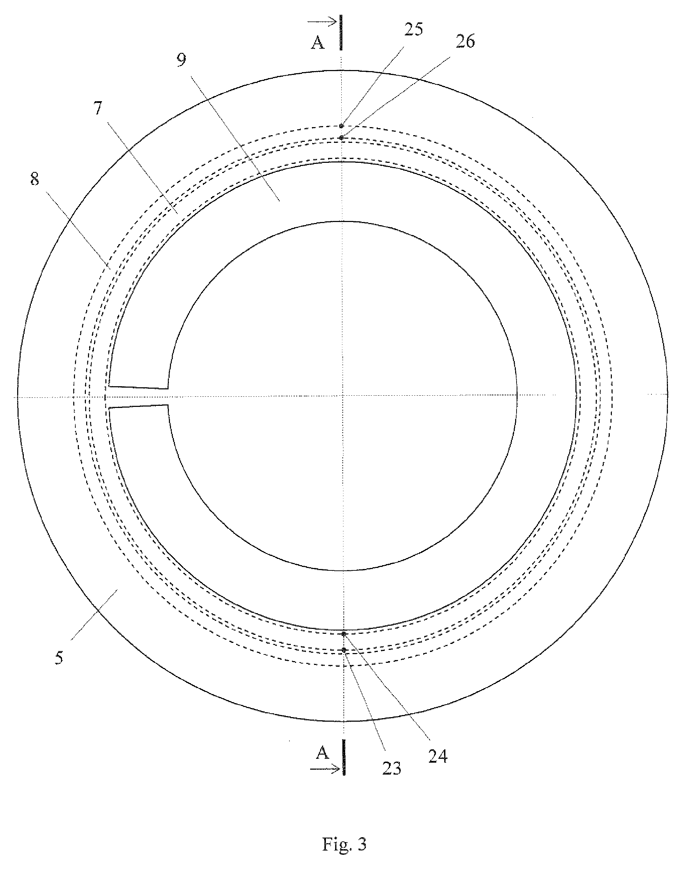

The conducting coating 9 (Fig. 3) is in the form of a metal strip (made of platinum). It is arranged along a circumference on the inner surface 6 of the cover 5 above the flat conducting spiral of the inductance coil of the oscillating circuit 2 arranged at the inner side 3 of the membrane 1. The width of the first turn 10 and the last turn 11 of the flat conducting spiral of the inductance coil of the oscillating circuit 2 is bigger than the width of the middle part turns 12 of the flat conducting spiral of the inductance coil of the oscillating circuit 2 (Fig. 2).

As an example of the claimed pressure sensor, a device realizing the method of measuring movements of controlled objects can be used (see the specification of patent RU 2207498, Cl. G 01 B 7/00 titled "Method of measuring movements of controlled objects") wherein a capacitor is deleted, and the conducting coating arranged on the inner surface of the pressure sensor cover functions as an acting object.

Said devise comprises a flat conducting spiral of the inductance coil of an oscillating circuit 2 and a measuring and registering unit 4. The flat conducting spiral of the inductance coil of the oscillating circuit 2 comprises a first turn 10, a last turn 11 and a middle part 12.

The measuring and registering unit 4 (Fig. 4) comprises flat conducting spirals of inductance coils for swapping power to the oscillating circuit 7, reading data, frequency of the oscillating circuit 8 resonance oscillations, the leads of said coils are connected to the inputs of a measuring amplifier 13 with outputs connected to the inputs of a comparator 14, the outputs of said comparator are connected to synchronous input of a frequency divider (not shown in Fig. 4) of a time interval former 15, to a first input of OR element 16, and to synchronous input of a trigger 17.

The information input of the trigger 17 is connected to the output of a biased multivibrator (not shown in Fig. 4) of the time interval former 15, and the direct output is connected to the start input of a time interval measuring means 18. The group of information inputs and outputs of said means connected to a computer 19 through IEEE 488 CARD (not shown in Fig. 4) which is a general-purpose channel.

The time interval former 15 is connected to the computer 19 through serial channel RS-232C, the second input of the OR element 16 is the input 20 of starting continuous oscillations of the oscillating circuit, and an open collector output connected to power supply positive output through a resistor (not shown in Fig. 4) is connected to the base of a transistor 21. The emitter of the transistor is connected to the "general" output of the power supply, the collector is connected to the first output of the flat conducting spiral of the inductance coil for swapping power to the oscillating circuit 7, and the second output of the flat conducting spiral is connected to the power supply positive output 22.

The measuring amplifier 13 is known from publication by R. Kofman and F. Driscol, Operational Amplifiers and Linear Integrated Circuits, Moscow, Mir Publishers, 1979, page 148. Said amplifier can be based on standard operational amplifiers like KR544UD2. The comparator 14 can be based on KR554SA3, and the trigger 17, the OR element 16 and the transistor 21 correspondingly on K555TM2, K555LE1 and KT3102.

A multiple channel pulse generator (see specification of patent SU 1757085, Cl. H 03 K 3/64, Multiple Channel Pulse Generator) can be used as the time interval former 15. All connections of the generator 11 and synchronous inputs of timers 14 (see the drawing and specification of SU 1757085) are disconnected. One of three timers 14-1 is connected as a frequency divider. Its synchronization input is used in the realizing method device as a synchronous input of the time interval former 15, and the output of the output group 33-1 is connecter to a synchronous input of one of the timers 14-2 used as a biased multivibrator, the output of said biased multivibrator included in the group the outputs 33-2 is used as the output of the time interval former 15.

More detailed description of timers 14-1, 14-2,.... 14-N and functional parameters of a frequency divider and a biased multivibrator can be found in V.A. Shahnov, editor, Source Book, Microprocessors and Microprocessor Complexes of Integrated Circuits, Vol. 1, Moscow, Radio and Sviaz Publishers, 1988, pages 76-82.

Device I2-24 described in the book edited by V.A. Kuznetsov, Source Book Measurements in Electronics, Moscow, Energoatomizdat Publishers, 1987, page 351, is used as the time interval measuring means.

Computer 19 can be an IBM-compatible PC.

The first 23 and the second 24 outputs of the flat conducting spiral of the inductance coil for swapping power to the oscillating circuit 7, and the first 25 and the second 26 outputs of the flat conducting spiral of the inductance coil for reading data, frequency of the oscillating circuit 8 resonance oscillations are made of platinum, soldered in the cover 5 (see Fig. 1) and correspondingly connected to the collector of the transistor 21, the positive output 22 of the power supply and the inputs of the measuring amplifier 13.

Further sensor operation is illustrated by the example of an absolute pressure sensor placed directly into a medium to be measured, for example in silicone oil or in an inert filling (halohydrocarbon).

### Operation of the device

After switching on the power supply, a program of the computer 19 sets modes of operation of timers 14-1, 14-2 (not shown in Fig. 4) of the time interval former 15. Channel 0 of the timer 14-1 (not shown in Fig. 4) is set in mode 2 - of frequency divider. Channel 0 of the timer 14-2 (not shown in Fig. 4) is set in mode 1 - of biased multivibrator. The outputs of the channels are set in unit position. Thus, logical 1 level is set at the information output of the trigger 17. Logical 0 levels are set to inputs of the timers 14-1, 14-2 (not shown in Fig. 4) blocking operations of the timers.

The time interval measuring means 18 is set in the mode of pulse duration measurement with the help of the computer 19 through the general-purpose channel.

Then a single pulse is sent to start input 20 and further to the second input of the OR element 16, for example through parallel channel of the computer 19 (not shown in Fig. 4) or with then help of a button and time delay. The positive pulse comes to transistor 21 base opening the transistor 21, and current starts to flow through the flat conducting spiral of the inductance coil for swapping power to the oscillating circuit 7 creating induction voltage and electromagnetic oscillations in the oscillating circuit.

When the pressure of the measured medium P (see Fig. 1) changes, the membrane 1 and the flat conducting spiral of the inductance coil of the oscillating circuit 2 deform, and the overlapping area and distance between the flat conducting spiral of the inductance coil of the oscillating circuit 2 and the conducting coating 9 change.

As a result, the self-capacitance of the flat conducting spiral of the inductance coil of the oscillating circuit 2 changes, said capacitance being distributed along the flat conducting spiral of the inductance coil of the oscillating circuit 2, and due to change in capacitive coupling, capacitances between portions of the conducting spiral of the inductance coil of the oscillating circuit 2, the inductance of the flat conducting spiral of the inductance coil of the oscillating circuit 2, capacitance and frequency of the oscillating circuit change.

The frequency of the oscillating circuit resonance oscillations is measured by reading data from the flat conducting spiral of the inductance coil for reading data, frequency of the resonance oscillations of the oscillating circuit 8, the outlets of said coil being connected to the direct inputs of the measuring amplifier 13, which amplifies the signal. Then the signal from the output of the measuring amplifier 13 comes to the direct input of the comparator 14 on the inverting input of which a reference voltage is supplied. From the output of the comparator 14 the positive signals of rectangular waveform come to the first input of the OR element 16 (at this time logical 0 level is supplied to the second input of to the OR element 16), to the synchronous input of the time interval former 15 and to the synchronous input of the trigger 17. The rectangular pulses from the output of the OR element 16 come to the transistor 21 base. When the transistor opens, current flows through the flat conducting spiral of the inductance coil for swapping power to the oscillating circuit 7. A change in the current results in an inductance emf in the oscillating circuit causing currents corresponding to the direction of the current in the flat conducting spiral of the inductance coil of the oscillating circuit 2 in each half-cycle of the oscillations in the oscillating circuit. In the positive half-cycle of the oscillations in the oscillating circuit power is swapped during an increase in the current in the flat conducting spiral of the inductance coil for swapping power to the oscillating circuit 7, and in the negative half-cycle of the oscillations in the oscillating circuit power is swapped during a decrease in the current in the flat conducting spiral of the inductance coil for swapping power to the oscillating circuit 7, since the power is swapped in the moments of a change in the current in the flat conducting spiral of the inductance coil for swapping power to the oscillating circuit 7. Thus, continuous resonance oscillations are induced in the oscillating circuit with power swapped in certain moments for increasing the amplitude of the oscillations, the oscillation are digitized, and the frequency of the oscillating circuit is determined.

Then the computer 19 program sends logical 1 levels from the start unit (not shown in Fig. 4) to enable inputs of timers 14-1, 14-2 (not shown in Fig. 4) and enables their operations. One of the timers from the group 14-1 (not shown in Fig. 4) set in the mode of the frequency divider starts to divide the input frequency coming from the output of the comparator 14 to the synchronous input of the time interval former 15 by number n set in the counter of the timer channel 0 (not shown in Fig. 4) by the computer 19 program. At the output of this timer (not shown in Fig. 4) a negative pulse is formed each time when counting ends, the duration of the pulse is equal to the duration of the oscillation period of the input frequency of the signal coming from the output of the comparator 14. The signal from the output of the frequency divider (not shown in Fig. 4) enters the synchronization input of the timer group 14-2 (not shown in Fig. 4) of the time interval former 15 operating in the mode of a biased multivibrator, and at negative edge of the input pulse starts the biased multivibrator (not shown in Fig. 4), while the output of it is set at logical 0 level. This logical 0 level enters the information input of the trigger 17 that at positive pulse front from the comparator 14 is set at zero state and forms a beginning of the time interval, which the time interval measuring means 18 starts measuring. The biased multivibrator (not shown in Fig. 4) of the time interval former 15 decrements the number written in its counter (counting the number of negative pulses at its synchronous input from the output of the frequency divider (not shown in Fig. 4)), and at receiving the predetermined number of pulses, sets its output at the logical 1 level. At the first positive swing of pulses coming from the outlet of the comparator 14 to the synchronous input of the trigger 17, the trigger 17 is set at 1 level and forms the closure of time interval measurement for the time interval measuring means 18. The trigger 17 is required for eliminating the influence of time delays during front switching in counter actuation. The time interval formed by the trigger 17 and measured by the time interval measuring means 18 is read with the help of the computer 19 through a general-purpose channel, and the value of the oscillation frequency of the oscillating circuit is determined by measuring time interval corresponding to the predetermined number of oscillation periods of the oscillating circuit.

Then with the help of the computer 19 program the value of the measured medium pressure is determined. For that, the functional relationship between the oscillating circuit frequency and the measured medium pressure is preliminary determined and saved in the computer 19 memory.

### Industrial Applicability

The inventive pressure sensor can be produced from available elements and materials at an enterprise of the radio engineering industry. It can be widely used in particular devices for automatic pressure measurements, as obvious to a person skilled in the art. Particular embodiments are described in the specification. The specification and the examples should be considered as illustrations of the invention, the essence of which and the scope of what to be protected are determined in the following claims including the scope of distinctive features.

## Claims

1. A pressure sensor comprising:
a membrane made of a dielectric material in the shape of a disc with an inductance element in the form of a flat conductive spiral of an inductance coil, arranged at the inner side of the membrane, and
a measuring and registering unit,
**characterized in that**
said pressure sensor comprises a cover made of a dielectric material in the shape of a disc placed on the membrane, a conducting coating at the inner surface of said cover above the flat conductive spiral of the inductance coil of an oscillating circuit arranged at the inner side of said membrane,
wherein the measuring and registering unit comprises an inductance coil for swapping power to the oscillating circuit and an inductance coil for reading data, frequency of the oscillating circuit resonance oscillations.

2. The sensor according to claim 1 **characterized in that** the cover and the membrane are made of fused quartz.

3. The sensor according to claim 1 **characterized in that** the conducting coating is in the shape of a metal strip placed along the circumference at the inner surface of the cover.

4. The sensor according to claim 1 **characterized in that** the inductance coil for swapping power to the oscillating circuit, inductance coil for reading data, frequency of the oscillating circuit resonance oscillations of the measuring and registering unit are in the form of flat conducting spirals and arranged on the cover inner surface.

5. The sensor according to claim 1 **characterized in that** the width of the first and the last turns of the flat conducting spiral of the oscillating circuit inductance coil is bigger than the width of the middle part turns of the flat conducting spiral of the oscillating circuit inductance coil.
